Europäisches Patentamt

European Patent Office

Office européen des brevets

(19)

(11) Publication number: **0 144 194 B1**

(12) # EUROPEAN PATENT SPECIFICATION

(45) Date of publication of patent specification: **08.04.92** (51) Int. Cl.⁵: **C01B 25/023**

(21) Application number: **84308087.0**

(22) Date of filing: **21.11.84**

(54) **Production of red phosphorus.**

(30) Priority: **08.12.83 CA 442809**

(43) Date of publication of application:
**12.06.85 Bulletin 85/24**

(45) Publication of the grant of the patent:
**08.04.92 Bulletin 92/15**

(84) Designated Contracting States:
**BE CH DE FR GB IT LI NL SE**

(56) References cited:
**FR-A- 2 379 478
US-A- 2 476 335
US-A- 4 081 333
US-A- 4 152 403**

(73) Proprietor: **Tenneco Canada Inc.
2 Gibbs Road
Islington Ontario M9B 1R1(CA)**

(72) Inventor: **Ryan, Kevin Patrick
7 Woodburn Drive
Gloucester Ontario K1B 3A6(CA)**
Inventor: **Yank, Carl Denis
606 O'Neil Street
Buckingham Ouebec J8L 2V7(CA)**

(74) Representative: **Hamilton, Raymond et al
c/o Albright & Wilson Limited, P.O. Box 2098,
7 Stars Road
Oldbury, Warley, West Midlands B69
4PR(GB)**

EP 0 144 194 B1

**Description**

The present invention relates to the production of red amorphous phosphorus by thermal conversion of yellow phosphorus.

The production of red amorphous phosphorus by the thermal conversion of yellow phosphorus is well known. In one commercial operation, such conversion is achieved by heating a batch of yellow phosphorus in an enclosed container until significant thermal conversion commences at about 270° to 280°C, thermal conversion is allowed to occur while cooling air or the like is used to remove the heat of conversion until the exotherm subsides, the container is further heated to a temperature of about 370° to 380°C to achieve further conversion of the yellow phosphorus to red phosphorus, and the container then is cooled to room temperature, opened and the red phosphorus recovered.

The latter operation is a time consuming one, typically involving about 100 hours for each batch, and does not result in complete conversion of yellow phosphorus to red phosphorus, so that precautions must be taken to avoid release of unconverted yellow phosphorus to the atmosphere and provision for disposal of unconverted yellow phosphorus must be provided. In addition, the red phosphorus is obtained in the form of a hard cake-like compact mass which requires considerable mechanical action to remove the same from the container and to reduce it to particulate form.

Efforts have been made to improve on this prior art procedure, in particular to improve the efficiency of conversion of yellow phosphorus to red phosphorus and to provide the process as a continuous one, but to date none of these improvements have reached commercial operation. Representative patents covering such processes are U.S. Patents Nos. 4,152,403 and 4,188,367.

In US Patent 2476335 is described a process for separating yellow phosphorus from red phosphorus in which a mixture of red phosphorus in yellow phosphorus is heated while being passed up a heated conveyor to evaporate yellow phosphorus, with crushing of the red phosphorus in the conveyor to give a ground red phosphorus powder. A disadvantage of this process is this crushing operation. Applicants have discovered a process making a soft crumbly red phosphorus.

In accordance with the present invention, there is provided a process of forming red amorphous phosphorus by thermal conversion of yellow phosphorus which is a radical departure from existing technology and efforts to date to improve thereon.

As mentioned above, the process of conversion of yellow phosphorus to red phosphorus is highly exothermic. In this invention, the heat so generated is permitted to effect volatilization of yellow phosphorus, so that the heat of conversion is dissipated by the volatilization. The volatilized yellow phosphorus is condensed outside the conversion vessel and the condensed yellow phosphorus can be used to form part of the next or subsequent batch which is converted to red phosphorus.

Thus from one aspect this invention provides a process for the production of red amorphous phosphorus by the thermal conversion of yellow phosphorus to red phosphorus characterised in that yellow phosphorus is permitted to evaporate from a charge of liquid yellow phosphorus at its boiling point in a reaction vessel and form yellow phosphorus vapour which is evolved from the reaction vessel and is collected in a condenser and simultaneously with the evaporation conversion to red phosphorus takes place in the reaction vessel, with the simultaneous evaporation and conversion occurring subsequently in the reaction vessel until substantial completion of the thermal conversion to red phosphorus.

In the present invention, therefore, in complete contrast to prior art procedures, no attempt is made to confine the yellow phosphorus to prevent volatilization but rather this latter is permitted to occur. The volatilization of yellow phosphorus serves to remove heat of conversion, thereby eliminating the necessity for the application of external cooling. At atmospheric pressure, the rate of conversion of yellow phosphorus to red amorphous phosphorus becomes significant at about 260°C with the generation of approximately 86 kcal per kg of yellow phosphorus. Accumulation of the heat increases the mass temperature until the boiling point of yellow phosphorus is reached at 280°C. The temperature stabilizes at the boiling point and vaporization of yellow phosphorus occurs, requiring 96 kcal per kg of yellow phosphorus evaporated. In the present invention, therefore, two processes occur simultaneously, namely thermal conversion of yellow phosphorus to red phosphorus and volatilization of yellow phosphorus which removes the heat of conversion. The volatilized yellow phosphorus can readily be collected by condensation and recycled, so that there is no overall loss of yellow phosphorus. Although a substantial proportion of the initial yellow phosphorus is volatilized, this is not disadvantageous.

The physical form of the red amorphous which results in this invention is considerably different from that produced in the prior art. As noted above, in the cited prior art procedure, the red phosphorus is formed as a hard compact mass which requires considerable physical effort to remove the same from the container and reduce it to particulate form. The red phosphorus product of this invention, in contrast, has considerable porosity and is soft. The product is readily removed from the reaction vessel and requires very little effort to provide the same in useful particulate form.

In a preferred embodiment of the invention, the overall rate of production of read amorphous phosphorus is improved, as compared with the cited prior art process, despite the necessity in the present invention to recover and recycle a considerable proportion of the initial charge of yellow phosphorus. In this preferred embodiment, the charge of yellow phosphorus is provided in a vessel which is introduced into a partially preheated reaction zone. The contents of the vessel then are rapidly heated to a temperature at which the rate of conversion become significant by increasing the temperature of the reaction vessel. The evaporated yellow phosphorus is removed from the reaction vessel and condensed while conversion to red phosphorus occurs in the reaction vessel. Once the conversion reaction is complete, the reaction vessel may be removed from the reaction zone without the necessity of awaiting complete cooling of the reaction vessel. The vessel containing converted red phosphorus is cooled outside the reaction zone while a further batch of yellow phosphorus can be introduced to the reaction zone for conversion. An inert gas, such as, nitrogen, usually is passed into the vessel to flush yellow phosphorus vapour therefrom and to provide an inert atmosphere during cooling. This semi-continuous type mode of operation considerably decreases the overall processing time necessary to produce red phosphorus.

In this preferred procedure, the vessel housing the yellow phosphorus may take the form of an openable closed vessel having a vent for yellow phosphorus vapour which communicates with a vapour outlet of the reaction zone, which in turn communicates with a yellow phosphorus condenser. Rapid heating of the vessel within the reaction zone may be effected using any convenient heat source, such as, molten lead.

In a preferred embodiment a mass of yellow phosphorus covered with water is confined in an enclosed reaction vessel, the enclosed reaction vessel is introduced into a reaction zone in heat conducting relationship with a body of molten lead having an elevated temperature, a vapor flow path is established from the reaction vessel to the exterior of the reaction zone, the reaction vessel is heated by the molten lead as the lead cools from the elevated temperature to a set point of about 290°C to effect firstly evaporation of the water from the enclosed reaction vessel and subsequently simultaneous thermal conversion of yellow phosphorus to red amorphorus and evaporation of yellow phosphorus at the boiling point thereof until the thermal conversion substantially ceases to occur, the yellow phosphorus vapour is conveyed through the vapour flow path and is condensed, the lead and the reaction vessel are heated to a temperature above the atmospheric pressure boiling point of yellow phosphorus, for a time sufficient to evaporate substantially all residual unconverted yellow phosphorus, the reaction vessel is removed from the reaction zone, and the red amorphous phosphorus is recovered from the reaction vessel.

The invention is described further, by way of illustration, with reference to the accompanying drawings, in which:

Figure 1 is a schematic elevational view of one embodiment of apparatus for carrying out the process of the invention; and

Figure 2 is a close-up of a portion of the apparatus of Figure 1.

Referring to the drawings, a yellow-to-red phosphorus conversion reactor 10 is provided. This reactor 10 is a modified form of the piece of equipment disclosed in U.S. Patent No. 4,081,333 which is used for the distillation of small quantities of phosphorus from phosphorus mud, a by-product of the conventional thermal conversion process, at high temperatures of typically from about 400° to about 600°C.

The conversion reactor 10 has a vapor outlet 12 which communicates with a condenser 14 for condensation of evaporated yellow phosphorus. The reactor 10 has a lid 16 with a depending peripheral flange 18 which is received in a channel 20 formed at the top of the vessel walls 22 to effect sealed closure of the reactor 10. Electrical heating elements 24 are embedded in the base, walls and lid of the reactor 10 to effect heating of the reactor and its contents. The reactor 10 contains a supply of molten lead 26 to act as a heat transfer agent.

The use of molten lead in this illustrated embodiment of the invention is but one example of a wide variety of heating sources which may be used to effect thermal conversion of yellow phosphorus. Other heat transfer media which are liquid at the desired temperatures may be used, or, alternatively, an electrically-heated place may be used.

When used to effect thermal conversion of yellow to red phosphorus a portable skip 28, housing the yellow phosphorus, is positioned in the reactor 10 suspended from the lid 16 and in contact with the molten lead 26. The skip 28 is an enclosed container and has a vapor off-take pipe 30 communicating with the vapor outlet 12. The skip 28 may also be provided with a central opening 32 for the passage of inert gas to the skip 28 to remove phosphorus vapor from the skip upon completion of the reaction.

In operation of the illustrated apparatus, the skip 28 is filled with yellow phosphorus, usually under a

3

water blanket, and closed. The lead mass 26 is heated to a temperature above its melting point and to a temperature such that the sensible heat of the molten lead is sufficient to effect the desired heating of the skip 28, typically to about 450°C, and the skip 28 is suspended from the lid 16 and inserted into the reactor 10 in contact with the bath of molten lead with the vapor off-take pipe 30 in communication with the vapor outlet 12.

As energy is absorbed by the skip 28 and its contents, the lead cools and its temperature stabilizes at the set point of 290°C. When the contents of the skip 28 heat up to 100°C, evaporation of the water occurs, forming an inert atmosphere within the skip 28 and also the reactor 10. Once all the water has been evaporated, the yellow phosphorus is heated by the molten lead to the boiling point of yellow phosphorus at 280°C.

Simultaneous conversion of yellow phosphorus to red phosphorus and evaporation of yellow phosphorus occur at this temperature. The evaporated yellow phosphorus is conducted by off-take pipe 30 to the vapor outlet 12 and thence to the condenser 14 for condensation therein. The use of the off-take pipe 30 minimizes phosphorus deposits on the inner walls of the reactor.

The distillation of yellow phosphorus is prominent during the early stages of the reaction and the reaction rate may be measured as a function of the quantity of yellow phosphorus recovered in the condenser 14.

Monitoring of the reaction temperatures, quality of sampled vapors and the rate of recovery of yellow phosphorus in the condenser 14 may be used to determine the termination of the conversion reaction. The lead bath 26 then is heated to a temperature above the atmospheric pressure boiling point of yellow phosphorus and preferably to about 320° to 330°C, to effect volatilization of residual quantities of yellow phosphorus. The reactor 10 is opened and the skip 28 is lifted from the reactor. A purge of nitrogen or other inert gas is inserted through the cover of the skip 28 through opening 32 to drive out the last traces of phosphorus vapour and to ensure that an inert atmosphere is maintained during cooling. The skip 28 is detached from the lid 16 and allowed to cool.

Once the skip 28 is detached from the lid 16, a further skip containing yellow phosphorus may be attached thereto and inserted into the reactor 10, after the lead has been reheated to its initial temperature. Conversion of a further batch of yellow phosphorus to red phosphorus, therefore, can be effected while the first batch is still cooling, thereby considerably decreasing the overall processing time. In a typical operation, the 280°C temperature is reached in about 7 hours, thermal conversion and yellow phosphorus evaporation occurs for about 7 hours at 280°C, heating to 320°C takes about 6 hours and subsequent heating at about 320° to 330°C is effected for about 5 hours, providing a total processing time of 25 hours compared with about 100 hours for the typical commercial operation discussed above.

The condensed yellow phosphorus collected in the condenser 14 may be reutilized in a subsequent batch conversion.

When the skip 28 has cooled sufficiently, water is normally added and the cover is removed for access to the red amorphous phosphorus. The red amorphous phosphorus is obtained as a soft crumbly, mass which requires little further processing to provide the desired particulate form. It is somewhat surprising that the red amorphous phosphorus is obtained in such a useful form directly from the conversion process.

The invention is illustrated further by the following Example:

Example

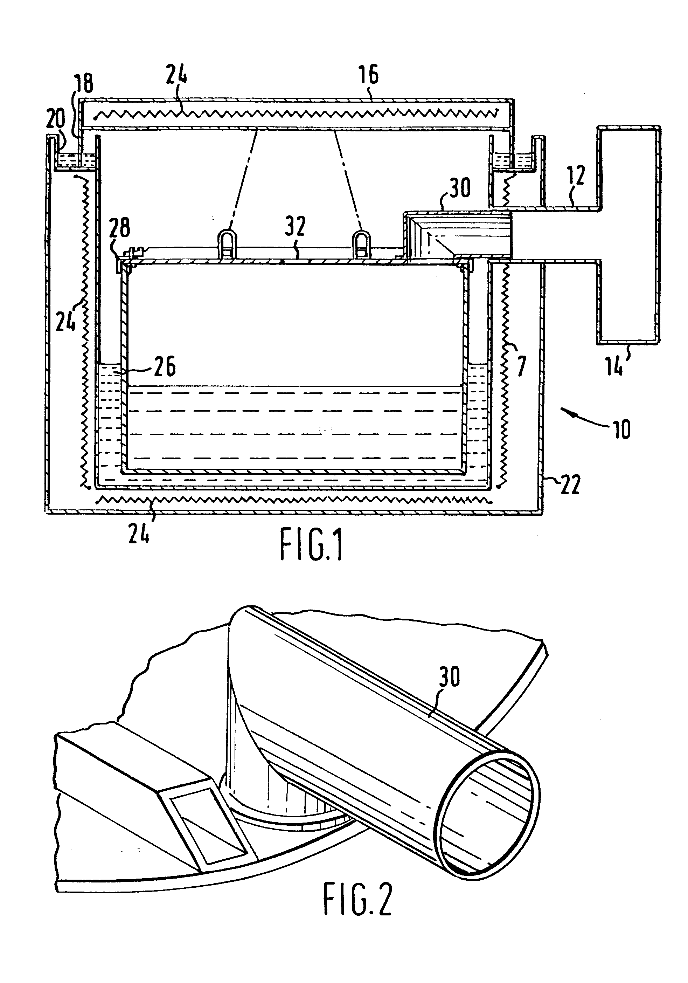

Thermal conversion of yellow phosphorus to red amorphous phosphorus (RAP) was carried out using the apparatus of Figure 1. A 3.5 meter diameter and 90 cm deep skip was charged with 4250 kg of yellow phosphorus and covered with 70 kg of water. The lead bath in the reactor was heated to 450°C and the skip was lowered into the reactor into contact with the molten lead bath. Throughout the experiment, a purge of nitrogen of 215 litres/min was maintained.

Temperature sensors were applied to the skip and located in the molten lead and the temperatures monitored. In addition, the quality of the off-gas stream and the quantity of condensate collected were monitored during the process. The temperature in the evaporation of the water occurred. Thereafter with the lead bath temperature having dropped to 290°C, the temperature of the phosphorus rose to 280°C at which temperature the bulk of the conversion of yellow phosphorus to red phosphorus and evaporation of yellow phosphorus occurred. Upon completion of the conversion, the lead bath temperature was raised to 330°C to effect further distillation of unconverted yellow phosphorus. The skip thereafter was removed from the reactor and air and water cooled to ambient temperature. The temperature/time profile is reproduced in the following Table I:

Table I

| Temperature (°C) | | Time (hrs) | Notes |
|---|---|---|---|
| Skip | Lead | | |
| 20 | 450 | 0 | |
| 100 | 400 | 0.5 | Evaporation of water commenced |
| 100 | 350 | 2 | |
| 110 | 350 | 3.5 | Evaporation of water ceased |
| 280 | 290 | 7 | RAP conversion commenced |
| 280 | 290 | 13 | RAP conversion ceased |
| 330 | 330 | 19 | Residual $P_4$ distillation commenced |
| 330 | 330 | 24 | Residual $P_4$ distillation ceased |
| 20 | - | 30 | |

The red amorphous product obtained was a reddish colour, porous and easily fractured and occupied a depth of 19 cm in the skip, indicating a bulk density of 1.014 g/cc. 1550 kg of red amorphous phosphorus was obtained, corresponding to 36.5 wt% of the initial charge. 2550 kg of yellow phosphorus were collected in the condenser, corresponding to 60 wt% of the initial charge. Total power consumption during the run was 5500 MJ, or approximately 3500 MJ/tonne of red amorphous phosphorus, which is considerably less than a typical power consumption of 10,000 MJ/tonne of red amorphous phosphorus in the case of the cited prior art procedure.

Samples of the red amorphous phosphorus from different parts of the skip were tested for residual yellow phosphorus content. The results are reproduced in the following Table II:

Table II

| No. | Sample Location | $P_4$ (ppm) |
|---|---|---|
| 1 | Core at top | 258 |
| 2 | Core at bottom | 230 |
| 3 | at surface on opposite side from take-off port | 229 |
| 4 | at surface below take-off line | 195 |
| 5 | at surface at edge | 206 |

The results reproduced in Table II indicate a relatively low residual yellow phosphorus content in all samples.

In summary of this disclosure, the present invention provides a novel method of forming red amorphous phosphorus which does not suffer from the drawbacks of the cited prior art procedure and permits formation of the product in a readily-processable form in a much shorter reaction cycle. Modifications are possible within the scope of this invention.

**Claims**

1. A process for the production of red amorphous phosphorus by the thermal conversion of yellow phosphorus to red phosphorus characterised in that yellow phosphorus is permitted to evaporate from a charge of liquid yellow phosphorus at its boiling point in a reaction vessel and form yellow phosphorus vapour which is evolved from the reaction vessel and is collected in a condenser and simultaneously with the evaporation conversion to red phosphorus takes place in the reaction vessel, with the simultaneous evaporation and conversion occurring subsequently in the reaction vessel until substantial completion of the thermal conversion to red phosphorus.

2. A process according to claim 1 characterised in that the thermal conversion is initiated by heating the yellow phosphorus in an enclosed reaction vessel by means of an external heating source to the boiling point of the yellow phosphorus and the yellow phosphorus vapour is evolved from the reaction zone and condensed.

5

3. A process according to claim 1 or 2 characterized in that a mass of yellow phosphorus covered with water is confined in an enclosed reaction vessel, the enclosed reaction vessel is introduced into a reaction zone in heat conducting relationship with a body of molten lead having an elevated temperature, a vapor flow path is established from the reaction vessel to the exterior of the reaction zone, the reaction vessel is heated by the molten lead as the lead cools from the elevated temperature to a set point of about 290°C to effect firstly evaporation of the water from the enclosed reaction vessel and subsequently simultaneous thermal conversion of yellow phosphorus to red amorphous and evaporation of yellow phosphorus at the boiling point thereof until the thermal conversion substantially ceases to occur, the yellow phosphorus vapour is conveyed through the vapour flow path and is condensed, the lead and the reaction vessel are heated to a temperature above the atmospheric pressure boiling point of yellow phosphorus, for a time sufficient to evaporate substantially all residual unconverted yellow phosphorus, the reaction vessel is removed from the reaction zone, and the red amorphous phosphorus is recovered from the reaction vessel.

4. A process according to claim 3 characterised in that yellow phosphorus is evaporated at its atmospheric pressure boiling point of above about 280°C and the temperature above the atmospheric pressure boiling point to which the reaction vessel is subsequently heated is about 320°C to about 330°C.

5. A process according to any of the preceding claims characterised in that the external heating source comprises a heat transfer medium having a temperature sufficient to permit the yellow phosphorus to be heated to the boiling temperature, said heat transfer medium being liquid at the boiling temperature.

6. A process according to claim 5 characterised in that the heat transfer medium is molten lead and the molten lead cools from an initial temperature towards its set point as the yellow phosphorus is heated to the boiling temperature.

7. A process according to any of claims 3 - 6 characterised in that an inert gas stream flows into the reaction vessel after the evaporation of the residual yellow phosphorus to remove residual traces of yellow phosphorus vapour and to provide an inert atmosphere in the reaction vessel.

8. A process according to any of claims 3 to 7 characterised in that the reaction vessel is removed from the reaction zone, cooled and opened to permit the recovery of red amorphous phosphorus.

9. A process according to claim 8 characterised in that after the removal of the reaction vessel from the reaction zone a second reaction vessel is introduced into the reaction zone.

**Revendications**

1. Procédé pour la production de phosphore rouge amorphe par la conversion thermique du phosphore jaune en phosphore rouge, caractérisé en ce que le phosphore jaune peut s'évaporer d'une charge de phosphore jaune liquide à son point d'ébullition dans un récipient de réaction et former une vapeur de phosphore jaune qui sort du récipient de réaction et est recueillie dans un condenseur et en ce que, simultanément avec l'évaporation, la conversion en phosphore rouge a lieu dans le récipient de réaction avec l'évaporation et la conversion simultanée se produisant ultérieurement dans le récipient de réaction jusqu'à l'achèvement substantiellement complet de la conversion thermique en phosphore rouge.

2. Procédé selon la revendication 1, caractérisé en ce que la conversion thermique est initiée par le chauffage du phosphore jaune dans un récipient de réaction fermé au moyen d'une source de chauffage externe au point d'ébullition du phosphore jaune et en ce que la vapeur de phosphore jaune est évacuée de la zone de réaction et est condensée.

3. Procédé selon la revendication 1 ou 2, caractérisé en ce qu'une masse de phosphore jaune recouverte d'eau est contenue dans un récipient de réaction fermé, le récipient de réaction fermé étant introduit dans une zone de réaction en relation de conduction thermique avec une masse de plomb fondu ayant une température élevée, un trajet d'écoulement de vapeur étant établi depuis le récipient de réaction vers l'extérieur de la zone de réaction, le récipient de réaction étant chauffé par le plomb fondu lorsque

6

le plomb se refroidit de la température élevée jusqu'à son point de solidification d'environ 290°C pour effectuer tout d'abord l'évaporation de I eau contenue dans le récipient de réaction fermé et ensuite la conversion thermique simultanée du phosphore jaune en phosphore amorphe rouge et l'évaporation du phosphore jaune au point d'ébullition de celui-ci, jusqu'à ce que la conversion thermique cesse essentiellement de se produire, la vapeur de phosphore jaune étant transportée sur le trajet d'écoulement de vapeur et étant condensée, le plomb et le récipient de réaction étant chauffés à une température supérieure au point d'ébullition du phosphore jaune sous pression atmosphérique pendant une durée suffisante pour évaporer essentiellement tout le phosphore jaune résiduel non transformé, le récipient de réaction étant retiré de la zone de réaction et le phosphore amorphe rouge étant récupéré dans le récipient de réaction.

4. Procédé selon la revendication 3, caractérisé en ce que le phosphore jaune est évaporé à son point d'ébullition sous pression atmosphérique égal à environ 280°C et la température au-dessus du point d'ébullition sous pression atmosphérique à laquelle le récipient de réaction est chauffé ultérieurement, est comprise entre environ 320°C et environ 330°C.

5. Procédé selon l'une quelconque des revendications précédentes, caractérisé en ce que la source de chauffage externe comprend un fluide de transfert thermique ayant une température suffisante pour permettre que le phosphore jaune soit chauffé jusqu'à sa température d'ébullition, ledit fluide de transfert thermique étant liquide à la température d'ébullition.

6. Procédé selon la revendication 5, caractérisé en ce que le fluide de transfert thermique est du plomb fondu et que le plomb fondu se refroidit depuis une température initiale jusqu'à son point de solidification lorsque le phosphore jaune est chauffé jusqu'à la température d'ébullition.

7. Procédé selon l'une quelconque des revendications 3 à 6, caractérisé en ce qu'un courant de gaz inerte pénètre dans le récipient de réaction après l'évaporation du phosphore jaune résiduel, pour éliminer les traces résiduelles de vapeur de phosphore jaune et créer une atmosphère inerte dans le récipient de réaction.

8. Procédé selon l'une quelconque des revendications 3 à 7, caractérisé en ce que le récipient de réaction est retiré de la zone de réaction, est refroidi et est ouvert pour permettre la récupération du phosphore rouge amorphe.

9. Procédé selon la revendication 8, caractérisé en ce qu'un deuxième récipient de réaction est introduit dans la zone de réaction après l'enlèvement du récipient de réaction de la zone de réaction.

**Patentansprüche**

1. Verfahren zur Herstellung von rotem amorphen Phosphor durch thermische Umwandlung von gelbem Phosphor in roten Phosphor, **dadurch gekennzeichnet,** daß gelber Phosphor aus der Beschickung von flüssigem gelben Phosphor bei dessen Siedepunkt aus einem Reaktionsbehälter verdampfen gelassen wird und der gebildete Dampf von gelbem Phosphor, der aus dem Reaktionsbehälter entweicht, in einem Kondensator gesammelt wird und gleichzeitig mit der Verdampfung die Umwandlung zu rotem Phosphor in Reaktionsbehälter stattfindet, wobei die gleichzeitige Verdampfung und Umwandlung im Reaktionsbehälter nacheinander im wesentlichen bis zur Vervollständigiung der thermischen Umwandlung zu rotem Phosphor erfolgt.

2. Verfahren nach Anspruch 1, **dadurch gekennzeichnet,** daß die thermische Umwandlung durch Erhitzen des gelben Phosphors in einem geschlossenen Reaktionsbehälter mittels einer äußeren Heizquelle bis zum Siedepunkt des gelben Phosphors eingeleitet wird und der Dampf des gelben Phosphors aus der Reaktionszone abgeführt und kondensiert wird.

3. Verfahren nach einem der vorhergehenden Ansprüche, **dadurch gekennzeichnet,** daß eine Masse von gelbem Phosphor, die mit Wasser bedeckt ist, in einem geschlossenen Reaktionskessel eingeschlossen wird, der geschlossene Reaktionskessel in eine Reaktionszone eingebracht wird, worin er mit einem Körper aus geschmolzenem Blei mit erhöhter Temperatur unter Wärmeleitungsbedingungnen zusammengebracht wird, daß ein Strömungsweg für den Dampf vom Reaktionskessel zum Außenbereich der Reaktionszone eingerichtet wird, daß der Reaktionskessel vom geschmolzenen Blei erhitzt wird, während das Blei von der erhöhten Temperatur auf einen Verfestigungspunkt von etwa 290°C abkühlt, damit zuerst das Wasser aus dem geschlossenen Reaktionskessel verdampft und anschließend gleichzeitig die thermische Umwandlung von gelbem Phosphor in roten Phosphor und die Verdampfung des gelben Phosphors bei dessen Siedepunkt erfolgt, bis die thermische Umwandlung im wesentlichen aufhört, daß der gelbe Phosphordampf durch den Strömungsweg für den Dampf abgeführt und kondensiert wird, daß das Blei und der Reaktionskessel auf eine Temperatur oberhalb des Siedepunkts von gelbem Phosphor bei Atmosphärendruck so lange erhitzt werden, bis praktisch aller restlicher nicht umgewandelter gelber Phosphor verdampft ist, daß der Reaktionskessel aus der Reaktionszone entfernt wird und daß der rote Phosphor aus dem Reaktionskessel isoliert wird.

4. Verfahren nach Anspruch 3, **dadurch gekennzeichnet,** daß der gelbe Phosphor bei seinem Siedepunkt bei Atmosphärendruck oberhalb etwa 280°C verdampft wird, und die Temperatur oberhalb des Siedempunkts bei Atmosphärendruck auf welche der Reaktionskessel anschließend erhitzt wird, etwa 320°C bis etwa 330°C beträgt.

5. Verfahren nach einem der vorhergehenden Ansprüche, **dadurch gekennzeichnet,** daß die äußere Erhitzungsquelle aus einem Wäremübertragungsmedium besteht, das eine Temperatur hat, die für das Erhitzen des gelben Phosphors auf Siedetemperatur ausreicht, wobei das Wärmeübertragungsmedium bei der Siedetemperatur flüssig ist.

6. Verfahren nach Anspruch 5, **dadurch gekennzeichnet,** daß das Wärmeübertragungsmedium geschmolzenes Blei ist und das geschmolzene Blei von einer Anfangstemperatur auf den Verfestigungspunkt hin abkühlt, während der gelbe Phosphor zur Siedetemperatur erhitzt wird.

7. Verfahren nach einem der Ansprüche 3 bis 6, **dadurch gekennzeichnet,** daß ein Inertgasstrom in den Reaktionskessel strömt, nachdem der restliche gelbe Phosphor verdampft ist, damit restliche Spuren von Dampf aus gelbem Phosphor entfernt werden und eine inerte Atmosphäre im Reaktionskessel geschaffen wird.

8. Verfahren nach einem der Ansprüche 3 bis 7, **dadurch gekennzeichnet,** daß der Reaktionskessel aus der Reaktionszone entfernt, gekühlt und geöffnet wird, um die Isolierung von rotem Phosphor zu ermöglichen.

9. Verfahren nach Anspruch 8, **dadurch gekennzeichnet,** daß nach Entfernen des Reaktionskessels aus der Reaktionszone ein zweiter Reaktionskessel in die Reaktionszone eingeführt wird.

FIG.1

FIG.2